# EUROPEAN PATENT APPLICATION

(11) **EP 3 998 138 A1**
(43) Date of publication of application: **18.05.2022**
(21) Application number: 21212105.7
(22) Date of filing: 16.10.2019
(51) Int. Cl.: B24B 31/00, B24B 31/06, B23Q 7/02, B24B 41/00, B24B 41/06

(54) **APPARATUS FOR POLISHING**

(30) Priority: 22.10.2018 IT 201800009668
(62) Divisional of application: 19203653.1
(71) Applicant: Luben Glass S.r.l., 26010 Offanengo (CR) (IT)
(72) Inventor: BASSI, Erik, 26010 Offanengo CR (IT)
(74) Representative: Barbaro, Gaetano

(57) **Abstract**

The present disclosure illustrates various apparatuses for polishing surfaces of mechanical pieces, each comprising a supporting frame, a suspension system mounted above the supporting frame, at least one vibrating table supported by the suspensions, at least one housing supported by the vibrating table for a container suitable for containing mechanical pieces to be polished or being itself a hollow mechanical piece to be internally polished, a drive unit functionally coupled to the vibrating table to make it vibrate, a locking/releasing system configured to lock/release the container to the vibrating table, as well as a system loading/discharging a polishing material. In the polishing equipment there is at least a dedicated system for a respective vibrating table of the apparatus, in which the dedicated system can be the suspension system, the loading/discharging system, the drive unit, or the locking/releasing system.

## Description

### TECHNICAL FIELD

The present disclosure relates to polishing of mechanical pieces and more particularly to an apparatus for polishing mechanical pieces put in an appropriate container or for polishing internal surfaces of cavities of molds or of mechanical pieces.

### TECHNOLOGICAL BACKGROUND

The operation of polishing a metal surface is carried out for example for polishing external surfaces of mechanical pieces, or even for polishing internal surfaces of pieces that define an internal cavity, such as molds, for example.

For polishing metal pieces a container is used in which at least one mechanical piece to be polished is placed, together with a cleaning composition, typically composed of a polishing liquid and fragments of a cleaning solid, whose function is to abrade the surfaces of the piece for polishing them. In order to cause a rubbing between the cleaning composition and the mechanical piece to be polished, the container, placed on a polishing apparatus, is hermetically closed and is shaken for a certain time.

In general, polishing takes time because it is necessary to carry out various operations to properly arrange the polishing equipment before starting it. For example, all the containers placed on the appliance must be filled, the containers must be hermetically sealed, attention should be paid that the machine has not been loaded too much, etc. In addition, if a problem is detected for a container, polishing must be stopped for the appropriate maintenance on the container that caused the malfunction. This is particularly disadvantageous because the stations in which the containers are installed are fixed, so that in the event of a maintenance work on one of them it is necessary to intervene on the entire equipment, which therefore remains inactive until the problem is solved.

### SUMMARY

An object of the present disclosure is to provide an improved polishing apparatus which overcomes at least some of the aforementioned disadvantages which limit the productivity of current equipment.

These objectives are achieved at least in part with an apparatus for polishing surfaces of mechanical pieces, comprising a supporting frame, a suspension system mounted above the supporting frame, at least one vibrating table supported by the suspensions, at least one housing supported from below by the vibrating table for a container suitable to contain mechanical pieces to be polished, or being itself a hollow mechanical piece to be internally polished, a drive unit functionally coupled to the vibrating table to make it vibrate, a locking-releasing system configured to lock-release the container to the vibrating table, as well as a loading/discharging system of a polishing material. Embodiments of other polishing apparatuses are defined in the appended claims.

### BRIEF DESCRIPTION OF THE DRAWINGS

Figure 1 is a profile view illustrating a suspension adjustment system of a vibrating table configured to adjust the distance between a vibrating table and a supporting frame of a polishing apparatus, according to an aspect of the present disclosure.
Figure 2 is a profile view showing a releasable locking system of mechanical pieces to a vibrating table of a polishing apparatus, according to an aspect of the present disclosure.
Figure 3 shows a profile view and a plan view of a plurality of vibrating tables independently of one another supported by respective suspensions on a same supporting frame, according to an aspect of the present disclosure.
Figure 4 shows a profile view and a plan view of a main vibrating table which transmits vibrations to a plurality of secondary vibrating tables, each housing a respective container or at least a mechanical piece to be polished, which can be individually connected/disconnected from the main vibrating table and arranged like a corolla around it, according to an aspect of the present disclosure.
Figure 5 shows pieces to be polished placed on a rotating table which can be rotated about an axis by a rotation system or it can be locked to a vibrating table, according to an aspect of the present disclosure.
Figure 6 is a profile view of a loading/discharging system of polishing material within a container for mechanical pieces to be polished having at least an upper aperture and/or a bottom opening or both according to an aspect of the present disclosure.
Figure 7 is a profile view of a loading/discharging system for selectively loading/discharging material for polishing mechanical pieces in several containers, each container having an upper opening and a lower opening.

### DETAILED DESCRIPTION

In the most general form, the polishing apparatus according to the present disclosure has at least one supporting frame, a suspension system mounted above the supporting frame, at least one vibrating table supported by the suspension system, a drive unit functionally coupled to the vibrating table to make it vibrate. The vibrating table supports from below at least one housing for a container defining at least one internal cavity accessible from the outside through an upper opening and a lower opening. The container is suitable for containing mechanical pieces to be polished or it can also be a hollow mechanical piece to be internally polished, such as a mold. The polishing apparatus has a locking-releasing system mounted on the housing, configured to releasably lock the hollow container or mechanical piece to the vibrating table, as well as a loading/discharging system for a polishing material, configured to enter the polishing material in the internal cavity of the hollow container or mechanical piece and to discharge the polishing material from the internal cavity at the end of a polishing process.

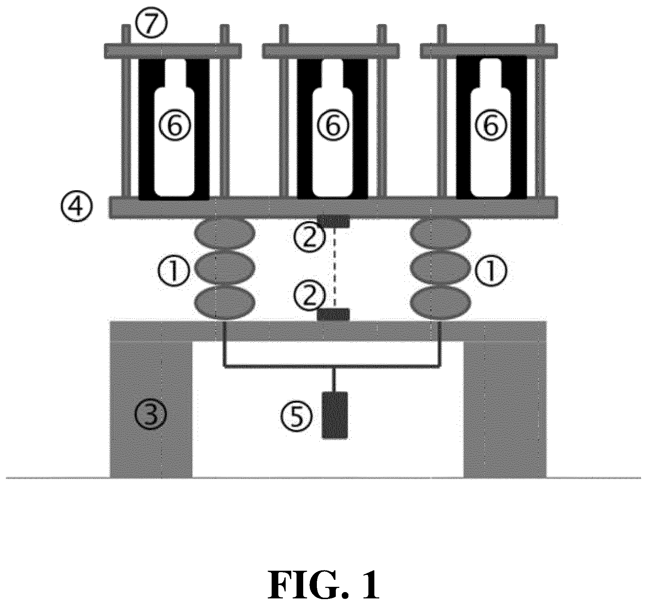

According to an aspect, illustrated schematically in Figure 1, a polishing apparatus of this disclosure has a self-regulating system of suspensions. Figure 1 shows an apparatus with a supporting frame 3, a suspension system 1, 2 and 5 which supports a vibrating table 4. The vibrating table 4 supports from below housings in which containers are placed which define a cavity 6 in which to place pieces to be polished, or mechanical pieces are placed (such as for example molds) which define a cavity 6 the internal walls of which must be polished. The containers defining the cavities 6 are fixed to the vibrating table 4 by means of a locking-releasing system 7. In the figure the case in which the locking-releasing system allows to lock-release each container independently from the others is exemplified, but this is unessential.

The suspension system comprising spring-loaded pneumatic actuators 1 and sensors for measuring a distance 2 suitable for sensing a distance between the vibrating table 4 when stopped and a fixed reference plane of the frame 3, configured to generate a distance signal representing the sensed distance. A programmable control unit 5 connected to the distance sensor and to the pneumatic actuators 1 is configured to receive the distance signal and to adjust a pressure of the pneumatic actuator according to the distance signal through at least one pneumatic/proportional valve and pressure/flow rate sensors, so as to maintain a nominal distance between the vibrating table 4 and the fixed reference plane when one or more containers/mechanical pieces to be polished are supported by the vibrating table 4.
According to one aspect, the pneumatic actuators 1 can have a pneumatic spring or also oscillating mechanical actuators.

Since the weights to be loaded on the vibrating table vary from time to time, both for weight and number, depending on the needs of the user, through the use of PLC software, the equipment is able to automatically recognize and manage the load present on the vibrating table 4 to obtain the ideal work condition of the system of suspensions 1, 2, 5, with the stabilization of the working conditions. In this way it is possible to monitor and maintain continuously optimal conditions during polishing cycles, safely stopping operation in the event of an anomaly. Consequently, the equipment, regardless of its weight, is always able to work at its best and to obtain the best performance both in terms of efficiency as well as of wear/consumption, increasing the yield.

By contrast, it is necessary to adjust/dimension the known apparatuses from time to time depending on the loads that they must manage. Indeed, the known apparatuses have fixed suspension systems or suspension systems with fixed setting and do not allow to obtain, depending on the load of the polishing apparatus, the optimal working condition. The equipment, when produced, is configured according to a standard reference (also in agreement with the customer): often, during the polishing phase, it is not possible to maintain this reference. Such a condition would necessarily make it mandatory to organize the system in a way suitable for its use, limiting its capacity. Given the variability of how much to produce, this is difficult if not impossible to do.

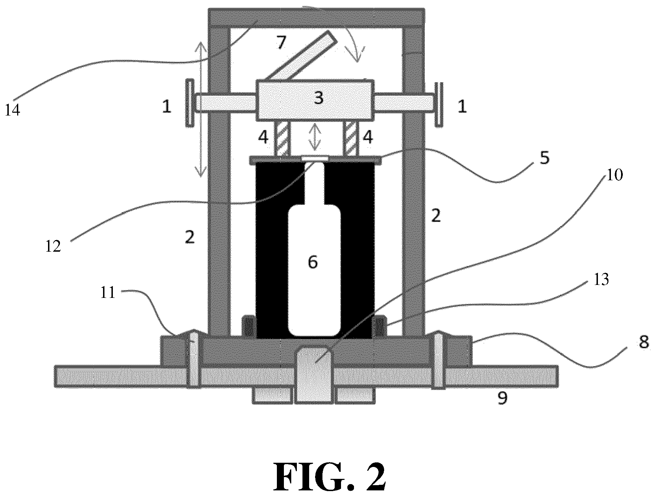

According to one aspect, a polishing apparatus of this disclosure has a locking-releasing system 1, 2, 3, 4, 5, 7, illustrated in Figure 2 of containers or hollow pieces to be polished 6, mounted on at least one housing 8, configured to releasably lock the hollow container or mechanical piece to the vibrating table 9. Figure 2 also shows:
- a pneumatic/hydraulic/with servomotor locking system 10 to the vibrating table 9 of the base 8 which defines the housing;
- mechanical fasteners 11 of the base 8 which defines the housing of the vibrating table 9;
- the upper opening 12 accessible from the outside of the cavity 6;
- optionally, a complementary manual or automatic mold pre-positioning system 13, which allows a manual or automatic centering of the mold defining the cavity 6.

According to one aspect, the locking-releasing system comprises, at least for a housing 8, preferably for each housing 8 of the polishing apparatus in which to place the hollow containers/pieces to be polished:
at least two beams 2 fixed to the respective base 8, spaced from each other so as to stand upright from the base 8 on opposite sides with respect to the container 6 supported by the base 8 and preferably connected at the upper portion by a transversal reinforcement element 14;
a cross-beam sliding in a guided manner over the two beams 2;
locking and releasing levers 1 mounted on the cross-beam and configured to stop the transverse sliding of the cross-beam on said beams 2, according to the direction of the arrows shown in Figure 2, when the levers 1 are in a first configuration, and to allow the sliding of the cross-beam when the levers 1 are in a second configuration;
a press 3 mounted on the cross-beam.

The press 3, has a perforated plate 5 abutting against an upper outer surface of the container or hollow mechanical piece 6, and is configured to be pressed against the container 6 to lock it, leaving pervious the upper opening 12 of the cavity 6. By means of compression springs 4 mounted on the perforated plate 5, a force is exerted to push the perforated plate 5 on the upper outer surface of the container or hollow mechanical piece 6. A mechanism for advancing-retracting the perforated abutment plate 5, configured to push the perforated plate 5 by compressing the compression springs 4 or to retract it away from the upper external surface of the container or hollow mechanical piece 6.

According to one aspect, the mechanism for advancing-retracting is a lever mechanism 7, or is a pneumatic and/or servo-assisted and/or hydraulic piston.

Through the use of this press system with preload, which can be positioned at various heights according to the height of the piece to be clamped, it is possible to clamp the piece on the table by simply acting on a handle which activates quickly a preloaded spring system. Once the cycle of the apparatus is finished, it is possible in an equally quick way to remove the piece and replace it with one of equal height or, by adjusting the height of the system once again, with one of a different height.

By using the release levers 1 the pressing system is slid until the plate 5 is at a preestablished nominal distance by the object to be fixed 6. At this point the system is locked by acting on the levers 1 and the handle 7 is operated to push with the plate 5 on the object 6 by preloading the springs 4. Once the work of the apparatus is finished, the lever 7 is simply operated to bring the press to a rest position. At this point it is possible to change the piece to be polished with one having a substantially similar height and to fasten it quickly and without having to adjust the height of the system, because the spring system 4 allows a certain tolerance on the height of the item 6 to be fastened. Otherwise, for items 6 having a significantly different height, the height, at which to fix the cross-beam, can be easily adjusted again.

The clamping by means of the press, besides being quick and adjustable, allows to guarantee a correct clamping force thanks to the system of preloaded springs.

Fixing the pieces using the current manual systems is slower, more onerous and tiring than this. The press turns out to be much more comfortable especially when pieces to be polished have the same height: once the first height set-up has been set simply by acting on the lever 7, it is possible to lock and unlock the pieces and quickly replace them. In known polishing apparatuses, the system for fixing objects is integrated on the vibrating table, limiting its versatility, and involves the locking of a flange resting on the mold/piece to be polished, tightening the flange by means of two bolts with a force not precisely determined.

The equipment shown in figure 2, also in the embodiment with screws, flange and bolts, represents, as in the other cases, a flexible device since each individual station is autonomous and therefore can be positioned on different boards, in various number, etc.:
- substantially, the vibrating table becomes "modifiable" in its stations, by number and / or conformation (becoming a dedicated apparatus for larger molds when initially it was for smaller molds);
- it is possible to move the station by a table to another vibrating table;
- finally it is possible to maintain the station without having to work on the whole vibrating table.

With regard to the automated locking system 10, this system, together with appropriately sized automated handling systems (robots, conveyors with piston shifters, ...) allows complete automation of the polishing process through the loading and unloading stations.

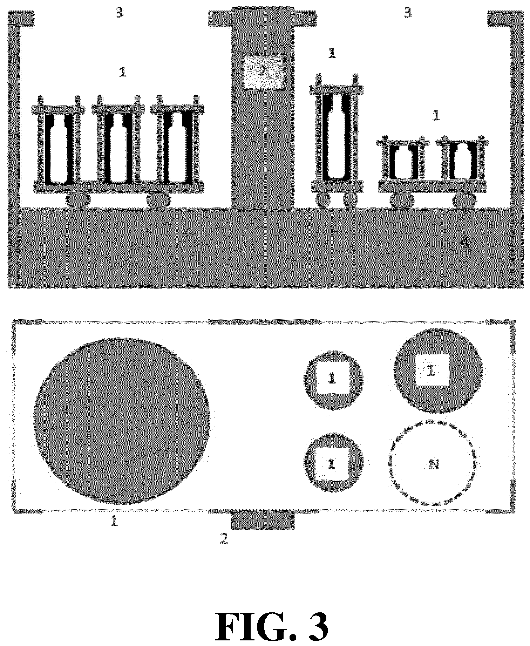

According to one aspect, a polishing apparatus of this disclosure may have more vibrating tables each designed to accommodate one or more pieces by polishing. As shown in Figure 3, each vibrating table 1 is supported by respective suspensions, which rest on the supporting frame 4, and supports at least one respective container. Each vibrating table is disconnected from all the other vibrating tables 1 so that it can be stopped while the other vibrating tables continue to vibrate.

According to one aspect, each one of the vibrating tables 1 is connected to a respective motor of the motor assembly of the apparatus to make it vibrate, and the apparatus comprises a central control panel 2 configured to activate each respective motor of a vibrating table 1 regardless of the respective motors of other vibrating tables 1.

Figure 3 also shows openings 3 of the polishing apparatus, for positioning molds with lifting systems, such as cranes, hoists, etc.

The equipment shown has "N" independent and independently motorized vibrating tables that can have various sizes and shapes to accommodate pieces of different sizes and quantities. All the N boards are managed by a single system but are independent in their programming and operation according to the setting of dedicated cycles so as to ensure not only the continuity of the polishing cycle of the tables not affected by the change/control of the piece but also to solve the problem of the anomaly that a cycle stop can generate; in such cases, indeed, all the tables not affected by the anomaly will continue to function. The "N" vibrating tables 1 can be of various sizes and independently working, whilst being enabled by the same control panel 2. The molds are placed on the tables 1 and polished according to independent and dedicated working cycles.

By contrast, the current apparatuses consist of a single vibrating table that can hold several pieces. As a result, to remove even just one piece it is necessary to stop the whole apparatus.

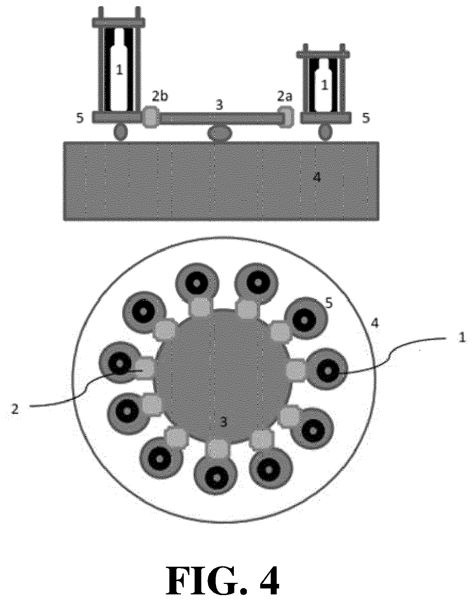

According to one aspect, a polishing apparatus of this disclosure, shown in Figure 4, has a main vibrating table 3 and several secondary vibrating tables 5 arranged in a corolla around the main vibrating table 3 equipped with a motor, in which each secondary vibrating table 5 it has a housing to lodge a respective container 1 or piece or "n" mechanical pieces to be polished. This is made possible thanks to a plurality of releasable latches 2a, 2b, in which each releasable latch 2a, 2b is configured to connect / disconnect a respective secondary vibrating table 5 to / from the main vibrating table 3 so as to transmit / not transmit a vibratory motion of the main vibrating table 3 to the respective secondary vibrating table 5. As in Figure 3, each vibrating table 3, 5 is supported by dedicated suspensions which rest on the supporting frame 4.

The shapes of the container 1 and of the main vibrating table 3 are indicative and may vary according to requirements. The equipment has "N" tables to which the vibratory motion of the main table is transmitted by actuating of individual motion transmission systems. When the motion transmission systems are in the rest position, the motion of the main table is not transmitted to the tables that must not be in use, or because they are at rest or because a product change is in progress or a cycle is ended.

The central table is independent and transmits motion to the single independent and autonomous tables by means of pneumatic clamping, or hydraulic clamping, or servo motor, etc. In this way each table can stop autonomously (release of the clamping) allowing the change / replacement of the piece while the other tables continue the polishing cycle, all through a special PLC control configured to monitor and manage the individual polishing tables in an independent and differentiated way (e.g. different times).

In case of breakage of one or more latches 2a, 2b, the other tables 5 continue to work. Obviously, the multi- table equipment allows to replace the pieces to be polished, giving continuity to the polishing cycle, unlike the prior single-table apparatuses that require the stopping of polishing operations for all the containers when a replacement is necessary even of a single piece. In the shown polishing apparatus, when a single table 5 terminates the loop, it is disconnected and, while the other tables continue to vibrate, it is possible to proceed to the loading and unloading of the workpiece. Each table can stop independently (release of the clamping) allowing the change/replacement of the piece while the other tables continue the polishing cycle, all by means of a special PLC control configured to monitor and manage independently and differentiated (e.g. times different) the individual polishing tables.

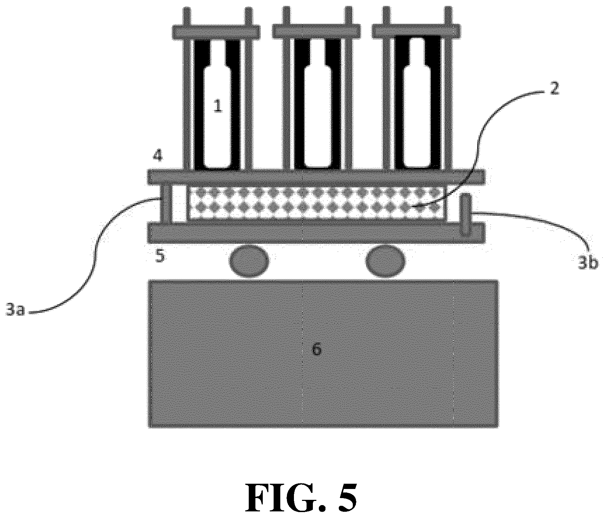

According to one aspect, a polishing apparatus of this disclosure, shown in Figure 5, has a rotating table 4 which can be connected or disconnected to a vibrating table 5, supported by suspensions which rest on the supporting frame 6 of the apparatus, by means of a special mechanical system (screws), or by means of pneumatic / hydraulic clamping, which allows it to rotate. On the rotating table 4, the pieces to be polished 1 are then fixed. In this way, the operator, being in the same position, is able to load and unload all the pieces on the rotating table, turning it by a step from time to time.

This is made possible by:
- a controlled rotation mechanism 2 mounted above the vibrating table 5;
- a rotating table 4 functionally mounted above the rotation mechanism 2 to be rotated about an axis of rotation relative to the respective vibrating table 5;
- a locking-releasing mechanism 3a, 3b of the rotating table 4, configurable to prevent or allow a rotation of the rotating table 4 relative to the vibrating table 5.

The prior apparatuses do not provide a rotating/movable table and the loading and unloading of pieces 1 takes place by means of an operator who moves to reach every single loading station.

The table 4 is made integral with the vibrating table 5 by means of the locking systems 3a, 3b which, in the rotation phase are released in position 3b and in the locking phase are in position 3a. This system allows the loading and unloading of the piece from a single point. Through the rotary movement of the table, once unlocked by the locking system, it will be possible to rotate the table and unload each individual station from the same point. Once the apparatus has been reloaded, it will be possible to lock the table using a mechanical system (screws), by means of pneumatic/hydraulic/servo-assisted locking.

This system, in the version with automatic (pneumatic or hydraulic or motorized) locking, can be equipped for automatic loading and unloading of the piece clamping equipment, with the aid of appropriately sized automated handling systems (robots, conveyors with piston shifters, ...).

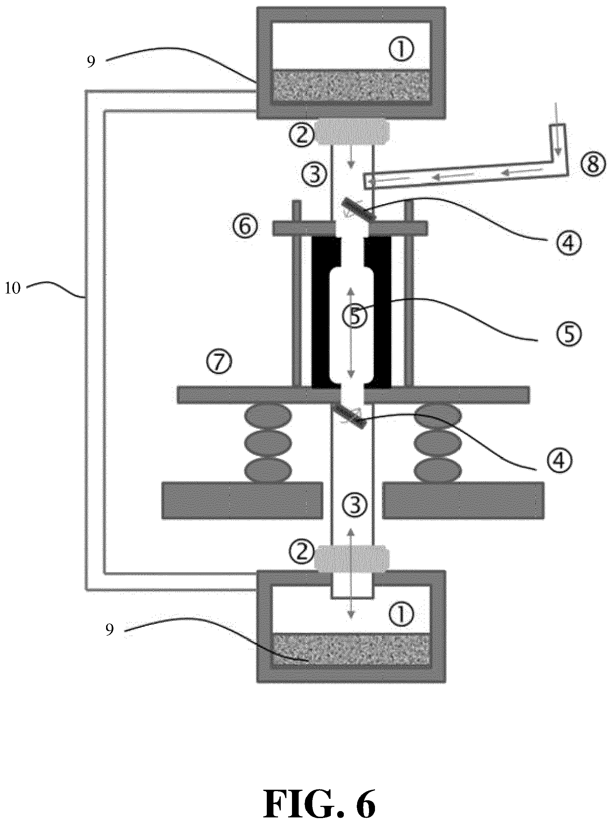

According to one aspect, an apparatus for polishing of this disclosure, shown in Figure 6, has a manual or semi-automatic or automatic loading/discharging system 1, 2, 3, 4, 8 for loading/discharging material for polishing mechanical pieces in a container 5. In the embodiment shown in Figure 6, the case in which the container 6 has an upper opening 4 for loading the polishing material and a lower opening 4 for discharging the polishing material has been considered. However, other embodiments (not shown) are possible in which the polishing material is loaded and unloaded from the same upper or lower opening. According to one aspect not shown in the figures, the container could have only the upper opening and the polishing material could be introduced by fall into the container, to polish a mechanical piece, and be aspirated from the upper opening at the end of the polishing. According to another aspect not shown in the figures, the container could have only the lower opening and the polishing material could be pumped/blown into the container, in order to polish a mechanical piece placed in it, and fall by the lower opening at the end of polishing.

As shown in other figures discussed above, the apparatus has a vibrating table 7 supported by suspensions which rest on the supporting frame of the apparatus. The container or piece with the cavity 5 to be polished (for example a mold) is fixed to the vibrating table 7 by a fixing system 6 to the table 7, or to a base (not shown) fixed to the vibrating table 7.

According to one aspect, the equipment of an automatic subsystem for loading/discharging solid polishing material, has:
- an intake valve 4 configured to close/open an upper opening of a container 5 suitable for containing mechanical pieces to be polished;
- a corresponding discharge valve 4 configured to close/open the lower opening of the container 5;
- a supply tank 1 of a solid polishing material to be introduced into the container 5 through the upper opening;
- at least one collection tank 1 of a solid polishing material which falls/is aspired from the container 5 through the lower opening;
- at least one dispenser 2 of solid polishing material connected to the supply tank 1, having a respective first fixed or movable conveyor 3 configured to be positioned above said intake valve to introduce the solid polishing material into the container;
- at least one aspiring system 2 of solid polishing material 9 connected to the collection tank 1, having a respective second fixed or movable conveyor 3 configured to be positioned below the discharge valve 4 to suck the solid polishing material from the container 5 and accumulate it in the collection tank 1.

Optionally, the two tanks 1 can be connected to recirculate the solid polishing material 9 from the collection tank to the supply tank.

As previously stated, the loading/discharging system could be adapted to fill a container with a polishing material or to remove a polishing material from a container having only an upper opening or a lower opening and only either an upper or lower supply and collection tank.

For example, in the case of a container equipped only with the upper opening, there would be only an upper valve for introducing the polishing material, which also acts as a discharge valve for the material itself at the end of polishing, and a single upper supply and collection tank 1. The dispenser 2 connected to the upper supply and collection tank 1 would introduce the polishing material into the cavity 5 by fall and would remove it from the cavity 5 by suction at the end of the polishing bringing it back into the upper supply and collection tank 1.

Similarly, in the case of a container equipped only with the lower opening, there would be only a lower valve for introducing and discharging the polishing material, and a single lower supply and collection tank 1. The dispenser 2 connected to the lower supply and collection tank 1 would introduce the polishing material into the cavity 5, pumping it from the bottom and removing it from the cavity 5 by fall at the end of the polishing bringing it back into the lower supply and collection tank 1.

With the aid of appropriate plc software, it is possible to load and discharge the solid polishing material inside the cavity to be polished, regardless of whether the system is placed above or below. This operation can be completely manual, semi-automated (where part of operations takes place automatically with manual assistance) or fully automated. In this case all the components are equipped with actuators and adjustments that allow the automation of the working cycle.

According to one aspect, through a dedicated duct 8 it is also possible to distribute the polishing liquid, introduced according to the direction of the arrows indicated in the figure.

The prior loading and discharging system of solid material contemplates the presence of an operator who carries out manual operations and thus subjected to errors in selecting the correct amount of material to be used.

Once the cavity to be polished 5 has been positioned, the mobile part of the duct 3 rests near the cavity so that the loading system 4 adheres to the equipment 6 or to the piece 5. The valve 4 and the distributor 2 operate and load the polishing material in automatic mode (or according to a default mode). At the end the valve 4 and the distributor 2 stop and the mobile part of the duct 3 returns to rest after the polishing cycle.

The polishing liquid can be distributed through the conveyor 8.

In the various configurations the mobile conveyor 3 can be:
- "fixed": in this case from the distributor there is a conveyor 3 for each polishing station;
- automated: in this case the conveyor that autonomously serves the loading and discharging areas can be provided for each location or can be unique depending on the configurations (for example, in the case of loading/discharging from a fixed point, moving towards a plurality of tables, ...) .

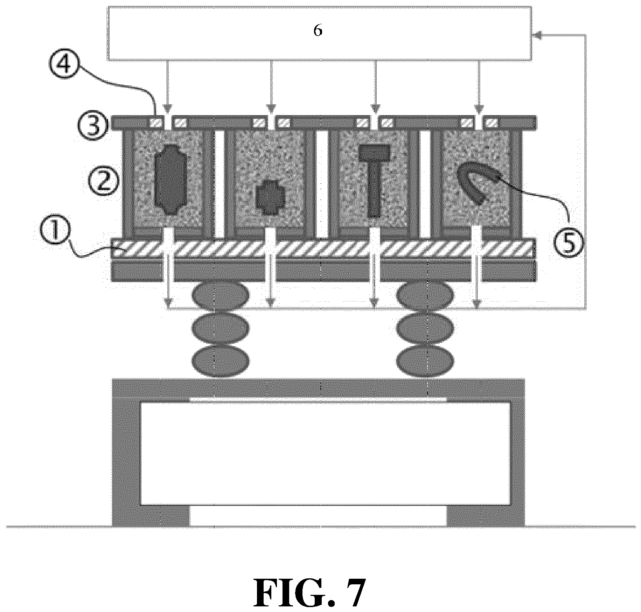

According to one aspect, a polishing apparatus of this disclosure, shown in Figure 7, has a loading/discharging system for selectively loading/discharging material for polishing mechanical pieces in several containers, each having at least one upper opening and at least one lower opening. The polishing equipment shown in the figure has:
- a plurality of containers 2 of pieces to be polished 5, each container 2 having at least one upper opening and at least one lower opening supported by said at least one vibrating table, in turn supported by suspensions which rest on the supporting frame;
- an anchoring base 1 of all the containers directly on the vibrating table, for example by means of mechanical (screws) or automatic (pneumatic, hydraulic, motorized) locking, wherein the anchoring base 1 is fixed at the vibrating table and defines the housings for containers 2;
- an automatic delivery/discharge subsystem 6 of liquid polishing material, configured to selectively introduce polishing liquid in each of the containers independently of the other containers.

In the shown figure, the containers are locked by an upper yoke 3 arranged to house the covers 4 for opening/closing each container. These covers can be locked manually, or automatically by means of a pneumatic, hydraulic or servomotor actuator.

The equipment can be placed on an apparatus with dedicated table or placed on an apparatus with a mixed table (for molds and this equipment) or in multi-table apparatuses on N different tables. The "monolithic"/autonomous structure of the equipment (1+2+3) allows to position and/or move the equipment from one table to another, from one apparatus to another apparatus, ..., moreover the use of dedicated plugs (4) to each container allows to use and to operate only and exclusively with the containers affected by the polishing cycle (e.g. if nine containers are available and only three are used, it operates only with three containers, resulting in significant time savings).

The independent containers allow a selective use of the same, also according to specific needs.

The various aspects illustrated in this disclosure may be individually present or be freely combined together in polishing apparatuses. For example, polishing apparatuses according to the present disclosure may be obtained starting from the polishing apparatus described in the Italian patent application number MI2009A001089, filed on 19/06/2009 in the name of the same applicant, granted with the number IT1395917, incorporating in it one or more aspects among those illustrated in the present description.

### Examples:

Example 1. An apparatus for polishing surfaces of mechanical pieces, comprising:
   a supporting frame,
   a suspension system mounted above said supporting frame,
   at least one vibrating table supported by said suspension system,
   at least one housing supported by said vibrating table for a container defining at least one internal cavity accessible from outside through an upper opening and/or a lower opening, said container being suitable for containing mechanical pieces to be polished or being a hollow mechanical piece to be polished internally,
   a drive unit functionally coupled to said at least one vibrating table to make it vibrate,
   a locking-releasing system mounted on said at least one housing, configured for releasably locking said container or hollow mechanical piece to the vibrating table,
   a loading/discharging system of a polishing material, configured to introduce the polishing material into the inner cavity of the container or of the hollow workpiece and to discharge the polishing material from the inner cavity at the end of a polishing process.
Example 2. The apparatus according to the previous example, in which said locking-releasing system comprises, for said at least one housing:
   at least two beams fixed to a base that defines the housing, said base being coupled to the respective vibrating table, said beams being mutually spaced with a fixed transverse element so as to stand upright from the base at opposite sides with respect to a container sustained by the base;
   a cross-beam sliding in a guided manner over said two beams;
   locking and releasing levers mounted on said cross-beam and configured to stop sliding of the cross-beam over said beams when the levers are in a first configuration, and to allow the cross-beam to slide over said beams when the levers are in a second configurati on;
   a press mounted on said cross-beam, having:
      - a perforated plate of abutment against an upper outer surface of a hollow mechanical container or piece, said plate being configured to be pressed against the hollow mechanical container or piece to lock it, leaving pervious a top opening of the inner cavity of the hollow mechanical container or piece,
      - compression springs mounted on said perforated plate and configured to push the perforated plate against said upper outer surface of the hollow mechanical container or piece, when compressed,
      - a mechanism for advancing-retracting said perforated abutment plate, configured to push said perforated plate by compressing the compression springs or retracting them away from the upper outer surface of the hollow mechanical container or piece.
Example 3. The apparatus according to example 2, wherein said mechanism for advancing-retracting is a lever mechanism or is a pneumatic and/or servo-assisted piston.
Example 4. The apparatus according to at least one of the previous examples, wherein said suspension system comprises:
   at least one controlled pneumatic actuator mounted on said supporting frame so as to support said vibrating table;
   a functionally mounted distance sensor for detecting a distance between said vibrating table, when stationary, and a fixed reference plane of said frame, configured to generate a distance signal representative of the detected distance;
   a programmable control unit connected to the distance sensor and to said pneumatic actuator, configured to receive said distance signal and to adjust a pressure of the pneumatic actuator so as to maintain a nominal distance between the vibrating table and said fixed reference plane when one or more mechanical pieces to be polished are supported by the vibrating table.
Example 5. The apparatus according to at least one of the previous examples, comprising a plurality of vibrating tables and a plurality of containers, each vibrating table of said vibrating tables being supported by a respective suspension of said suspension system and supporting at least one respective container suitable for containing mechanical pieces to be polished or at least one respective hollow mechanical piece to be polished internally, each vibrating table being disconnected from the other vibrating plates of said plurality or being connected to the other vibrating tables of said plurality by means of a respective releasable coupling, so as to be stopped while the other vibrating tables continue to vibrate.
Example 6. The apparatus according to example 5, wherein the vibrating tables of said plurality are disconnected from each other and each of them is connected to a respective motor of said drive unit to make it vibrate, the apparatus further comprising a centralized control panel configured to drive each respective motor of a vibrating table independently of the respective motors of the other vibrating tables.
Example 7. The apparatus according to example 5, comprising:
   a main vibrating table connected to said drive unit and to a plurality of secondary vibrating tables, said secondary vibrating tables being placed as a corolla around said main vibrating table;
   a plurality of releasable latches, each releasable latch of said plurality being configured to connect/disconnect a respective secondary vibrating table to/from the main vibrating table so as to transmit/not to transmit a vibratory motion of the main vibrating table to the respective secondary vibrating table.
Example 8. The apparatus according to at least one of the previous examples, comprising:
   a respective controlled rotation mechanism mounted above said at least one vibrating table;
   a respective rotating table functionally mounted over said rotation mechanism, to be rotated around its axis of rotation relatively to the respective vibrating table;
   a locking-releasing mechanism of the rotating table, configurable to prevent or to allow rotation of the rotating table relative to the vibrating table.
Example 9. The apparatus according to at least one of the previous examples, comprising a first automatic loading/discharging subsystem of solid polishing material, having:
   an intake valve configured to close/open an upper or lower opening of said at least one container suitable for containing mechanical pieces to be polished;
   at least one supply tank of solid polishing material to be introduced into the container through the upper or lower opening;
   at least one suction device of polishing solid material, connected to said supply tank, having a respective fixed or movable first conveyor configured to be positioned at said intake valve for inputting the solid polishing material into the container.
Example 10. The apparatus according to example 9, wherein said first automatic loading/discharging subsystem further comprises:
   a discharge valve configured to close/open a lower or upper opening of said at least one container;
   a collection tank for collecting solid polishing material that comes out of the container through the upper or the lower opening;
   at least one suction device of solid polishing material, connected to said collecting tank, having a respective fixed or movable second conveyor configured to be positioned at said discharge valve to remove the solid polishing material from the container and to store it in the collection tank.
Example 11. The apparatus according to at least one of the previous examples, comprising:
   a plurality of containers supported by said at least one vibrating table, each container being suitable for containing mechanical pieces to be polished and having a top opening and at least a lower opening for discharging liquid;
   an anchoring base of all said containers, said anchoring base being fixed to said vibrating table and defining said housings for the containers;
   a second automatic loading/discharging subsystem of liquid polishing material, configured to introduce selectively polishing liquid into each of the containers of said plurality independently of the other containers.
Example 12. The apparatus according to at least one of the previous examples, comprising:
   a plurality of containers supported by said at least one vibrating table;
   an upper yoke configured to lock the containers of said plurality, said yoke defining openings in correspondence of relative openings of said containers;
   a plurality of covers installed on the openings of said upper yoke, wherein each of said covers is configured to open or to close a respective container of said containers independently of the covers of the other containers of said plurality.

## Claims

1. An apparatus for polishing surfaces of mechanical pieces, comprising:
a supporting frame,
a suspension system mounted above said supporting frame,
at least one vibrating table supported by said suspension system,
at least one housing supported from below by said vibrating table for a container defining at least one internal cavity accessible from outside through an upper opening and/or a lower opening, said container being suitable for containing mechanical pieces to be polished or being a hollow mechanical piece to be polished internally,
a drive unit functionally coupled to said at least one vibrating table to make it vibrate,
a locking-releasing system mounted on said at least one housing, configured for releasably locking said container or hollow mechanical piece to the vibrating table,
a loading/discharging system of a polishing material, configured to introduce the polishing material into the inner cavity of the container or of the hollow workpiece and to discharge the polishing material from the inner cavity at the end of a polishing process;
a respective controlled rotation mechanism mounted above said at least one vibrating table;
a respective rotating table functionally mounted over said rotation mechanism, to be rotated around its axis of rotation relatively to the respective vibrating table.

2. The apparatus according to claim 1, wherein said rotating table can be connected or disconnected to a vibrating table and wherein said rotating table and said vibrating table supports from below said at least one housing for a container so as an operator being in a same position is able to load and unload pieces on the rotating table by turning it.

3. The apparatus according to one of the preceding claims, comprising a locking-releasing mechanism of the rotating table, configurable to prevent or to allow rotation of the rotating table relative to the vibrating table.

4. The apparatus according to one of the previous claims, in which said locking-releasing system comprises, for said at least one housing:
at least two beams fixed to a base that defines the housing, said base being coupled to the respective vibrating table, said beams being mutually spaced with a fixed transverse element so as to stand upright from the base at opposite sides with respect to a container sustained by the base;
a cross-beam sliding in a guided manner over said two beams;
locking and releasing levers mounted on said cross-beam and configured to stop sliding of the cross-beam over said beams when the levers are in a first configuration, and to allow the cross-beam to slide over said beams when the levers are in a second configuration;
a press mounted on said cross-beam, having:
- a perforated plate of abutment against an upper outer surface of a hollow mechanical container or piece, said plate being configured to be pressed against the hollow mechanical container or piece to lock it, leaving pervious a top opening of the inner cavity of the hollow mechanical container or piece,
- compression springs mounted on said perforated plate and configured to push the perforated plate against said upper outer surface of the hollow mechanical container or piece, when compressed,
- a mechanism for advancing-retracting said perforated abutment plate, configured to push said perforated plate by compressing the compression springs or retracting them away from the upper outer surface of the hollow mechanical container or piece.

5. The apparatus according to claim 4, wherein said mechanism for advancing-retracting is a lever mechanism or is a pneumatic and/or servo-assisted piston.

6. The apparatus according to at least one of the previous claims, wherein said suspension system comprises:
at least one controlled pneumatic actuator mounted on said supporting frame so as to support said vibrating table;
a functionally mounted distance sensor for detecting a distance between said vibrating table, when stationary, and a fixed reference plane of said frame, configured to generate a distance signal representative of the detected distance;
a programmable control unit connected to the distance sensor and to said pneumatic actuator, configured to receive said distance signal and to adjust a pressure of the pneumatic actuator so as to maintain a nominal distance between the vibrating table and said fixed reference plane when one or more mechanical pieces to be polished are supported by the vibrating table.

7. The apparatus according to at least one of the previous claims, comprising a plurality of vibrating tables and a plurality of containers, each vibrating table of said vibrating tables being supported by a respective suspension of said suspension system and supporting at least one respective container suitable for containing mechanical pieces to be polished or at least one respective hollow mechanical piece to be polished internally, each vibrating table being disconnected from the other vibrating plates of said plurality or being connected to the other vibrating tables of said plurality by means of a respective releasable coupling, so as to be stopped while the other vibrating tables continue to vibrate.

8. The apparatus according to claim 7, wherein the vibrating tables of said plurality are disconnected from each other and each of them is connected to a respective motor of said drive unit to make it vibrate, the apparatus further comprising a centralized control panel configured to drive each respective motor of a vibrating table independently of the respective motors of the other vibrating tables.

9. The apparatus according to claim 7, comprising:
a main vibrating table connected to said drive unit and to a plurality of secondary vibrating tables, said secondary vibrating tables being placed as a corolla around said main vibrating table;
a plurality of releasable latches, each releasable latch of said plurality being configured to connect/disconnect a respective secondary vibrating table to/from the main vibrating table so as to transmit/not to transmit a vibratory motion of the main vibrating table to the respective secondary vibrating table.

10. The apparatus according to at least one of the previous claims, comprising a first automatic loading/discharging subsystem of solid polishing material, having:
an intake valve configured to close/open an upper or lower opening of said at least one container suitable for containing mechanical pieces to be polished;
at least one supply tank of solid polishing material to be introduced into the container through the upper or lower opening;
at least one suction device of polishing solid material, connected to said supply tank, having a respective fixed or movable first conveyor configured to be positioned at said intake valve for inputting the solid polishing material into the container.

11. The apparatus according to claim 10, wherein said first automatic loading/discharging subsystem further comprises:
a discharge valve configured to close/open a lower or upper opening of said at least one container;
a collection tank for collecting solid polishing material that comes out of the container through the upper or the lower opening;
at least one suction device of solid polishing material, connected to said collecting tank, having a respective fixed or movable second conveyor configured to be positioned at said discharge valve to remove the solid polishing material from the container and to store it in the collection tank.

12. The apparatus according to at least one of the previous claims, comprising:
a plurality of containers supported from below by said at least one vibrating table, each container being suitable for containing mechanical pieces to be polished and having a top opening and at least a lower opening for discharging liquid;
an anchoring base of all said containers, said anchoring base being fixed to said vibrating table and defining said housings for the containers;
a second automatic loading/discharging subsystem of liquid polishing material, configured to introduce selectively polishing liquid into each of the containers of said plurality independently of the other containers.

13. The apparatus according to at least one of the previous claims, comprising:
a plurality of containers supported from below by said at least one vibrating table;
an upper yoke configured to lock the containers of said plurality, said yoke defining openings in correspondence of relative openings of said containers;
a plurality of covers installed on the openings of said upper yoke, wherein each of said covers is configured to open or to close a respective container of said containers independently of the covers of the other containers of said plurality.
